# EUROPEAN PATENT SPECIFICATION

(11) **EP 1 398 149 B1**
(45) Date of publication and mention of the grant of the patent: **02.05.2007**
(21) Application number: 02020754.4
(22) Date of filing: 16.09.2002
(51) Int. Cl.: B32B 27/34, B65D 75/30

(54) **Printable thermoplastic multilayer laminate for vacuum skin packaging applications**
Bedruckbares thermoplastisches Mehrschicht-Laminat für Vakuum-Skinverpackungen
Laminee multicouche thermoplastique, imprimable pour emballage moule sous vide

(43) Date of publication of application: 17.03.2004
(73) Proprietor: Cryovac, Inc., Duncan, S.C. 29334 (US)
(72) Inventor: Di Cesare Gregorio, I-20023 Cerro Maggiore(Milan) (IT); Colnaghi Renato, I-96100 Siracusa (IT); Fanfani Andrea, I-20148 Milano (IT)
(74) Representative: De Carli, Elda

(56) References cited:
- EP-A- 0 435 498
- EP-A- 0 692 374
- WO-A-93/08018
- WO-A-97/25258

## Description

The present invention relates to a new formable thermoplastic web suitable for use as top web in vacuum skin packaging (VSP) applications.

The new thermoplastic web is particularly suitable for use as a register printed top web for VSP packaging as it combines a remarkable formability and implosion resistance with the absence of a significative longitudinal stretching under conventional VSP conditions.

### BACKGROUND OF THE INVENTION

It is common practice to package articles such as food products in thermoplastic films or laminates to protect the product to be packaged from abuse and exterior contamination, and to provide a convenient and durable package for transportation and ultimate sale to an end user.

Vacuum skin packaging (VSP) is a process well known in the art for using a thermoplastic packaging material to enclose food products such as meat, processed meat, or fish.

The vacuum skin packaging process is in one sense a type of thermoforming process in which an article to be packaged serves as the mold for the forming web. An article may be placed on a support member, a card, either rigid or semi-rigid, or other bottom web, that can be flat or shaped, e.g. tray-shaped, and the supported article is then passed to a chamber where a thermoplastic top web is drawn upward against a heated dome and the softened top web is then draped over the article thus forming closely around the product and seals to the bottom web all around the product. The movement of the top web is controlled by vacuum and/or air pressure, and in a vacuum skin packaging arrangement, the interior of the container is vacuumized before final welding of the top web to the support web.

Various apparatus suitable for VSP and various VSP processes are described e.g. in U.S. Pat. Nos. 3,835,618, 3,950,919, and Re. 30,009, all issued to Perdue.

Various multi-layer structures particularly suitable for this packaging application have been described in the open and patent literature (see for instance EP-A-243,510 and EP-A-343,877). One common requirement of the top web packaging materials for VSP processes, is the requirement of a fair degree of formability of the material itself at the heating conditions applied in the VSP machine, because the material needs to be softenable by heating at such a temperature, that also needs to be acceptable for the packaged product, it has to be sufficiently stretchable in the vacuum chamber to conform with the heated dome, and capable of draping around the product even in case of irregularly shaped products.

In a VSP application, the dome temperature i.e. the temperature of the top of the chamber where a VSP film is drawn and heated for softening, is generally raised to a value of from about 180 to about 220 °C. The contact between the heated surface of the dome and the film lasts for few seconds. Enough to allow heating of the web to a temperature at which the structure becomes highly formable but not enough to give sticking or melting of the web, that is typically made of polymers, e.g. ionomer, polyethylenes, EVA, and the like polymers, with a melting temperature lower than the temperature set to heat the dome surface.

Generally, laminates for use as top webs in VSP processes are plain, i.e. they are not printed, or at least they are not register printed, as in fact with the currently available or known webs, the tension exerted on unwinding the web during the VSP cycle, would give a more-or-less pronounced stretching of the film in the longitudinal direction and would not allow to maintain the desired repeated length between subsequent printed images. In some vacuum packaging applications register printed top webs are employed, such as those described in EP-B-874,766 to Techy International S.A., which are obtained by register printing a biaxially oriented and heat-set material and then laminating the printed surface to a mono- or multi-layer sealant film. However, as the bi-axially oriented and heat-set substrates of these laminates are not enough formable, in these cases it is not possible to get a true skin effect. These structures, when used in VSP processes, are therefore recommended only for the packaging of shallow profile articles, and also in these cases, when used for packaging food products, they do not provide satisfactory results as the skin effect will not be as desired and any drip generated by the food product will be distributed between the top and the bottom webs, giving a bad appearance to the package and a weakening of the seal.

The need therefore exists of a laminate that can be satisfactorily used as a register printed top web in a VSP process, i.e. a laminate that is highly formable under the conditions normally applied in the VSP processes but at the same time under these same conditions will not stretch significantly into the longitudinal direction, so that it can be employed as a register printed top web without any problem.

### SUMMARY OF THE INVENTION

It has now been found that by including in an otherwise conventional top web structure for VSP a layer of a resin material having a tensile modulus (evaluated according to ASTM D882 on a 250 µm sheet) of at least 1,900 MPa and a Tg comprised between 70 and 100 °C, wherein the thickness of said layer is such to provide an overall laminate with a tensile modulus at room temperature (23°C) (ASTM D882) of at least 4,000 kg/cm², the laminate which is obtained will be sufficiently formable but will not stretch significantly at the temperatures reached in the VSP process so as to be suitable for use as a register printable VSP top web.

A first object of the present invention is therefore a cost coextruded, multilayer, laminate, suitable for use as a top web, and in particular as a printed top web, in VSP processes, said multi-layer laminate being characterized by a modulus at room temperature (23°C) of at least 4,000 kg/cm² and comprising at least
a polyolefin sealing layer a),
a gas-barrier layer b) and
a layer c) of a resin material having Tg comprised between 70 and 150 °C, preferably between 70 and 125 °C, and more preferably comprised between 70 and 100 °C, and a tensile modulus (evaluated according to ASTM D882 on a 250 µm sheet) of at least 1,900 MPa.

In a preferred embodiment of this first object the film is printed and in an even more preferred embodiment it is register printed.

A second object of the present invention is a VSP process where a coextruded multilayer film of the first object is used as the top web.

A third object is a VSP package comprising a support member, a product positioned on said support member and a coextruded multilayer film in accordance with the first object of the present invention which covers the product, substantially conforms to its shape and is sealed to the support member all around the periphery of the product.

### BRIEF DESCRIPTION OF THE DRAWINGS

FIG. 1 is a schematic cross section view of a composite film according to a preferred embodiment of the present invention.
FIG. 2 is a perspective view of one embodiment of a vacuum skin package that can be made using the film of the invention as the top web and further illustrates an optional tab arrangement for removing the top web from the end package.

### DEFINITIONS

As used herein, the term "core", and the phrase "core layer", as applied to the multilayer film refers to any internal film layer that has a primary function other than serving as an adhesive for adhering two layers to one another.

As used herein the term "tie layer" refers to any internal layer having the primary purpose of adhering two layers to one another.

As used herein, the phrase "outer layer" in connection with the multi-layer film refers to a layer having only one of its principal surfaces directly adhered to another layer of the film. As used herein "sealing layer" or "sealant layer" is the outer layer of the multi-layer film that in the VSP packaging process will be in contact with the food product and will seal to the support, while "abuse layer" will be the outer layer that in the VSP packaging process will be in contact with the heated dome.

As used herein the term "directly adhered" as applied to the layers of a multi-layer film, refers to the adhesion of a first element to a second element, without an adhesive, a tie layer or any other layer therebetween. In contrast, as used herein, the word "adhered" when used without the adverb "directly", broadly refers to the adhesion of a first element to a second element either with or without an adhesive, a tie layer or any other layer therebetween.

As used herein the term "polyolefin" refers to any polymerized or co-polymerized olefin that can be linear, branched, or cyclic, substituted or unsubstituted, and possibly modified. Resins such as polyethylene, ethylene-α-(C₄-C₈)olefin copolymers, ethylene-propylene copolymers, ethylene-propylene- α- (C₄-C₈)olefin ter-polymers, propylene-butene copolymer, polybutene, poly(4-methyl-pentene-1), ethylene-propylene rubber, butyl rubber, as well as copolymers of ethylene (or a higher olefin) with a comonomer which is not an olefin and in which the ethylene (or higher olefin) monomer predominates such as ethylene-vinyl acetate copolymers, ethylene-acrylic acid copolymers, ethylene-alkyl acrylate copolymers, ethylene-methacrylic acid copolymers, ethylene-alkyl methacrylate copolymers, ethylene-alkyl acrylate-maleic anhydride copolymers, ionomers, as well the blends thereof in any proportions are all included. Also included are the modified polyolefins, where the term "modified" is intended to refer to the presence of polar groups in the polymer backbone. The above polyolefin resins can be "heterogeneous" or "homogeneous", wherein these terms refer to the catalysis conditions employed and as a consequence thereof to the particular distribution of the molecular weight, branched chains size and distribution along the polymer backbone, as known in the art.

As used herein the term "ethylene-α-(C₄-C₈)olefin copolymers" is intended to refer to both heterogeneous and homogeneous (e.g., "single site", or "metallocene") materials with densities of from about 0.87 to about 0.940 g/cm³.

As used herein the term "ionomer" designates metal salts of acidic copolymers, such as metal salts of ethylene/acrylic acid copolymers or metal salts of ethylene/methacrylic acid copolymers. These are available from DuPont under the trade name Surlyn™.

As used herein the term "PVDC" refers to a vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) or to a blend thereof in different proportions. Generally said PVDC contains plasticisers and/or stabilizers as known in the art.

As used herein, the term "EVOH" includes saponified or hydrolyzed ethylene-vinyl acetate copolymers, and refers to vinyl alcohol copolymers having an ethylene comonomer content preferably comprised from about 28 to about 48 mole %, more preferably, from about 32 to about 44 mole % ethylene, and even more preferably, from about 36 to about 42 mole % ethylene, and a saponification degree of at least 85 %, preferably at least 90 %.

As used herein the term "polyamide" refers to high molecular weight polymers having amide linkages along the molecular chain, and refers more specifically to synthetic polyamides such as nylons. Such term encompasses both homo-polyamides and co-(or ter-) polyamides. It also specifically includes aliphatic polyamides or co-polyamides, aromatic polyamides or co-polyamides, and partially aromatic polyamides or co-polyamides, modifications thereof and blends thereof. The homo-polyamides are derived from the polymerization of a single type of monomer comprising both the chemical functions which are typical of polyamides, i.e. amino and acid groups, such monomers being typically lactams or aminoacids, or from the polycondensation of two types of polyfunctional monomers, i.e. polyamines with polybasic acids. The co-, ter-, and multi-polyamides are derived from the copolymerization of precursor monomers of at least two (three or more) different polyamides. As an example in the preparation of the co-polyamides, two different lactams may be employed, or two types of polyamines and polyacids, or a lactam on one side and a polyamine and a polyacid on the other side.

### DETAILED DESCRIPTION OF THE INVENTION

The laminate according to the first object of the present invention comprises at least three layers : a sealing layer a), a gas-barrier layer b) and a layer c) of a resin material having Tg comprised between 70 and 150 °C, preferably between 70 and 125 °C, and more preferably comprised between 70 and 100 °C, and a tensile modulus (evaluated according to ASTM D882 on a 250 µm sheet) of at least 1,900 MPa.

Resins suitable for the sealing layer a) are typically polyolefins characterized by very low Tg values, such as polyethylene homo- and co- or ter-polymers, and propylene co- or ter-polymers. Preferred resins for use in the sealing layer a) are polyethylenes, such as LDPE, MDPE, HDPE, linear polyethylenes, such as LLDPE and VLDPE, ethylene-vinyl acetate, ethylene-alkyl acrylates, ethylene-alkyl methacrylates, ionomers, ethylene-propylene copolymers, ethylene-propylene-butene-copolymers and their blends in any proportion.

The thickness of the sealing layer is generally of at least 5 µm. Much thicker sealing layers e.g. 10, 20, 30 µm thick and even more, are highly preferred

Non-limitative examples of gas-barrier polymers that can suitably be employed for the gas-barrier layer b) are EVOH, PVDC, polyamides and blends of EVOH with polyamides.

Preferably however the barrier layer b) will comprise EVOH, polyamides or blends thereof.

The thickness of the gas-barrier layer b) will be set in order to provide the overall multi-layer sheet with an Oxygen Transmission Rate (OTR) (evaluated by following the method described in ASTM D-3985 and using an OX-TRAN instrument by Mocon) lower than 10, preferably lower than 5 cm³/m².d.atm, when measured at 23 °C and 0 % of relative humidity.

Typically when EVOH is employed as the gas-barrier material, this is achieved with a barrier layer 2-3 µm thick. Thicker layers can be used if desired or if a lower OTR is needed, or when a polymer with lower barrier properties, such as a polyamide, is employed.

Thermoplastic resins characterized by a tensile modulus of at least 1,900 MPa and a Tg comprised between 70 °C and 100 °C, for layer c) are for instance the amorphous ethylene-copolyesters, certains polyamides, and certain cyclic olefin copolymers (COC).

Amorphous copolyester resins are polyesters characterized by the presence of irregularities in the polymer chains that are introduced by carrying out the polymerization reaction in the presence of a plurality of diacids, diols or both. Examples of suitable monomers that can be used in combination to provide for the copolyester resins include for instance terephthalic acid, isophthalic acid, ethyleneglycol, 1,4-butanediol, 1,6-hexanediol, 2,3-dialkyl-1,4-butanediols, cyclohexanedimethanol, and 2,2-dialkyl-1,3-propanediols.

Cycloolefin copolymers having the desired tensile modulus and Tg value are typically obtained using a metallocene catalyst. These are new types of amorphous polymers now commercially available where the glass transition temperature Tg can vary over a wide range depending on the amount of cyclic olefin incorporated in the copolymer. It is therefore possible to get copolymers tailored for this specific use. Ethylene/bicyclo[2.2.1]hept-2-ene copolymers (better known by their trivial name ethylene/norbornene copolymers) are the most interesting ones because of the easy availability of the starting comonomers but actually COC can be obtained by copolymerising not only ethylene but also higher α-olefins with mono- or polycyclic olefins.

The thickness of layer c) or the combined thickness of the c) layers will be suitably selected so as to provide for an overall multi-layer laminate with a modulus, at room temperature (23°C), of at least 4,000 kg/cm².

Layer c) is preferably the outer abuse layer of the laminate of the invention.

Alternatively said layer c) can be an inner layer and in this case a separate outer abuse layer d), typically of a relatively high melting polyolefm, such as high-density polyethylene, or propylene copolymers, is present.

Additional layers, such as for instance "bulk" layers or "structural" layers (layers f)), i.e. layers generally of polymers which are inexpensive relative to other polymers in the film and may be used to improve the abuse or puncture resistance of the laminate or just to provide the desired thickness, may be present. Polymers suitable for these layers are typically ethylene homo- and co-polymers, e.g. low density polyethylene, ethylene-vinyl acetate copolymers, linear low density polyethylenes and linear very low density polyethylenes. The thickness of the bulk layers that may possibly be present in the overall structure will depend mainly on the overall thickness desired for the laminate.

Other layers that may be present in the multi-layer laminate of the invention are tie or adhesive layers that are employed to better adhere one layer to another in the overall structure. In particular the laminate may include a tie layer e) directly adhered (i.e., directly adjacent) to one or both sides of the internal barrier layer b) and/or to one or both sides of layer c) and if the c) layer is an internal layer and the structure does contain a separate outer abuse layer, a tie layer may also be directly adhered to the internal surface of said outer abuse layer. Tie layers e) may also be used, in case of bulk layers, to better adhere said layers to the adjacent, sealing layer a), gas-barrier layer b), outer abuse layer c), or to layer c) and outer abuse layer d).

Tie layers may include polymers having grafted polar groups so that the polymer is capable of covalently bonding to polar polymers such as EVOH. Useful polymers for tie layers include ethylene-unsaturated acid copolymers, ethylene-unsaturated ester copolymers, anhydride-modified polyolefins, polyurethane, and mixtures thereof. Preferred polymers for tie layers include one or more of thermoplastic polymers such as ethylene-vinyl acetate copolymers with high vinyl acetate content (e.g. 18- 28 wt. % or even more), ethylene-(meth)acrylic acid copolymers, ethylene homo-polymers or co-polymers, such as LDPE, LLDPE or EVA, modified with anhydride or carboxylic acid functionalities, blends of these resins or blends of any of the above resins with an ethylene homo- or co-polymer, and the like known resins.

The tie layers are of a sufficient thickness to provide the adherence function, as is known in the art. Their thickness however is generally kept as low as possible in view of the high cost of these resins. Typically they will be from about 1, preferably about 2, to about 10, preferably about 8 µm. While layers thinner than 1 µm are generally not sufficient to provide the desired adherence, tie layers thicker than 10 µm may well be employed but without providing a further increase in the bond properties.

Each tie layer may be of a substantially similar or of a different composition and/or thickness.

To be used in a VSP process, as top web, the laminate needs to be formable, and therefore the resins used therein need to have a Tg lower than the temperature reached by the corresponding layer in the overall laminate during the pre-heating step and/or in the heated dome. Preferably the Tg of the resins used in the laminate is at least 3 °C, more preferably at least 5 °C, and even more preferably at least 8 °C, lower than the temperature the corresponding layer containing said resin reaches during the pre-heating step and/or in the VSP dome just before being stretched against the upper dome.

The multi-layer laminate of the present invention may have any total thickness, so long as the film provides the desired properties (e.g. formability, abuse and puncture resistance, seal strength) for the particular packaging application. For use as VSP top web the laminate has preferably a total thickness of (in ascending order of preference) from about 40 to about 200 µm, from about 50 to about 180 µm, from about 60 to about 150 µm, from about 70 to about 120 µm. In particular for VSP, thicker laminates will be used for packaging products of higher profile while thinner laminate are sufficient and preferred in order to vacuum skin package products with a shallow profile.

The laminate of the invention may include any number of layers from 3 to as many as 20. Preferably it will include from 4 to 12 layers and more preferably from 5 to 9 layers.

One or more of any of the layers of the multilayer film of the present invention may include appropriate amounts of additives typically included in structures for food packaging for the desired effect, as is know to those of skill in the packaging films art. For example, a layer may include additives such as slip agents (e.g., as talc), antiblock agents, antioxidants, fillers, dyes and pigments, cross-linking enhancers, cross-linking inhibitors, radiation stabilizers, oxygen scavengers, antistatic agents, and the like agents.

Below are some examples of laminates according to the present invention in which the alphabetical symbols designate the resin layers. Where the multi-layer laminate representation below includes the same letter more than once, each occurrence of the letter may represent the same composition or a different composition within the class that performs a similar function.
a/b/c, a/b/c/d, a/c/b/d, a/b/c/e/d, a/b/e/c/d, a/c/b/e/d, a/c/e/b/d, a/e/b/d/c, a/e/c/b/d, a/c/b/c/d, a/e/b/c/e/d, a/e/b/e/c/d, a/e/b/e/c/e/d, a/e/b/c/e/d, a/e/b/e/c, a/e/f/e/b/e/c, a/f/e/b/c, a/f/e/b/e/c, a/f/e/b/c/e/d, a/e/c/b/c/e/d, a/f/e/c/b/e/c a/f/e/c/b/e/d, a/f/e/c/e/b/c, a/f/e/b/e/c/e/d, a/f/e/b/e/f/e/c, a/e/c/b/e/d, a/e/f/e/b/e/f/e/c, a/e/c/e/b/e/d, a/e/c/e/b/e/c, a/e/c/e/b/e/f/e/c, a/e/c/e/b/e/f/e/d.
"a" is the outer sealing layer, which as discussed above may include one or more of polyolefins (e.g., ethylene homopolymers, such as low density polyethylene ("LDPE") and high density polyethylene ("HDPE"), ethylene copolymers, such as ethylene-α-olefin copolymers, such as heterogeneous or homogeneous linear low density ethylene-α-olefin copolymers (LLDPE), linear very low density ethylene-α-olefin copolymers (VLDPE), ethylene-vinyl acetate copolymers (EVA), ionomers, propylene-ethylene copolymers (EPC), ethylene-propylene-butene terpolymers (EPBT), and the like resins.
"b" is the gas barrier layer as defined above.
"c" is a layer of a resin material having Tg comprised between 70 and 150 °C, and preferably between 70 and 135 °C, and a tensile modulus (evaluated according to ASTM D882 on a 250 µm sheet) of at least 1,900 MPa.
"d" is an outer abuse layer (when layer c) is an internal layer), which as discussed above may include one or more polyolefin, preferably one or more of the relatively high melting polyolefins, such as high density polyethylene, and propylene copolymers.
"e" is a tie layer, which as discussed above may include one or more ethylene-unsaturated acid copolymers, ethylene-unsaturated ester copolymers, anhydride-modified polyolefins, and polyurethanes.
"f" is a bulk layer, which as discussed above may include one or more relatively inexpensive polymers such as typically ethylene homo- and co-polymers, e.g. low density polyethylene, ethylene-vinyl acetate copolymers, linear low density polyethylenes and linear very low density polyethylenes.

The laminates of the invention can be made by a coextrusion process as described in U.S. Pat. No. 4,287,151 that involves coextrusion through a round extrusion die, but preferably they are manufactured by a flat cast coextrusion process through a flat extrusion die, as said process provides for a better control of the partial and overall thickness. Suitable round or flat sheet multilayer coextrusion dies for coextruding the films of the invention are well known in the art.

The laminate of the invention is preferably crosslinked.

The preferred method of crosslinking is by electron-beam irradiation and is well known in the art. One skilled in the art can readily determine the radiation exposure level suitable for a particular application. Generally, however, radiation dosages of up to about 250 kGy are applied, typically between about 80 and about 240 kGy, with a preferred dosage of between 90 and 220 kGy, and a most preferred one between 110 and 200 kGy.

Irradiation is carried out conveniently at room temperature, although higher and lower temperatures, for example, from 0 to 60° C may be employed.

Chemical cross-linking agents may also be employed to provide the necessary cross-linking of at least one of the component films of the laminate. Such agents are typically added to a resin directly or by means of a master batch prior to extrusion of the blend.

The laminate of the present invention can be register printed in order to have printed on the surface of each VSP package thus obtained indicia such as trademarks, product information, container specifications, or logos.

Methods for printing the laminate of the present invention include any conventional methods of printing of plastic materials.

Particularly advantageous processes are relief printing (such as flexography or letter press) and intaglio or gravure printing (sometimes called rotogravure).

Relief printing involves raising the areas to be printed above the areas that will not be printed. Ink is applied to the raised surface that is brought in contact with the substrate on which the print is to appear, i.e. the ink rollers touch only the top surface of the raised areas. Ink is transferred to an image carrier and applied to the web as it passes between the image carrier and an impression cylinder. In flexography, i.e. the relief printing process mainly used to print packaging materials, fast drying inks (usually based on nitrocellulose or polyamide solubilized in low boiling solvents such as alcohols) are printed from a rotary drums covered by relief plates which are made of a flexible, elastomeric, material such as rubber.

Intaglio printing, often called gravure or rotogravure printing, is another useful printing method. Intaglio printing involves printing directly from a rotating engraved cylinder. The engraved cylinder rotates in a source of ink and as the cylinder rotates a doctor blade removes excess ink from areas that are not intended to transmit an image. Ink is transferred from the engraved cylinder as the web passes between the engraved cylinder and an impression cylinder.

In both systems, prior to winding the printed film into a roll, the ink is dried by passing the film sheet through an oven.

While register printed conventional laminates cannot be used in a VSP packaging process as the tensioning of the film required during the VSP cycle would lead to a significative stretching of the web in the longitudinal direction that would render impossible to maintain always the same distance between subsequently repeated printed images, with the laminate of the present invention, on the contrary, no significative stretching of the printed film occurs and it is thus possible to obtain VSP packages where the same image is repeated in exactly the same position in each package.

In order to increase ink receptivity by the laminate surface, in some instances it may be useful to submit the surface of the thermoplastic material that has to be printed to a corona or corona discharge treatment. Corona treatment which is described e.g. in US-A-4,120,716, involves ionization of a gas, such as air, in close proximity to a film surface, said ionization being initiated by a high voltage passed through a nearby electrode, and causing oxidation and other changes to the film surface, such as surface roughness, that would increase ink receptivity. Alternatively, or additionally, it would also be possible to increase adhesion of the ink to the thermoplastic material by coating the surface to be printed with a primer, as known in the print technology.

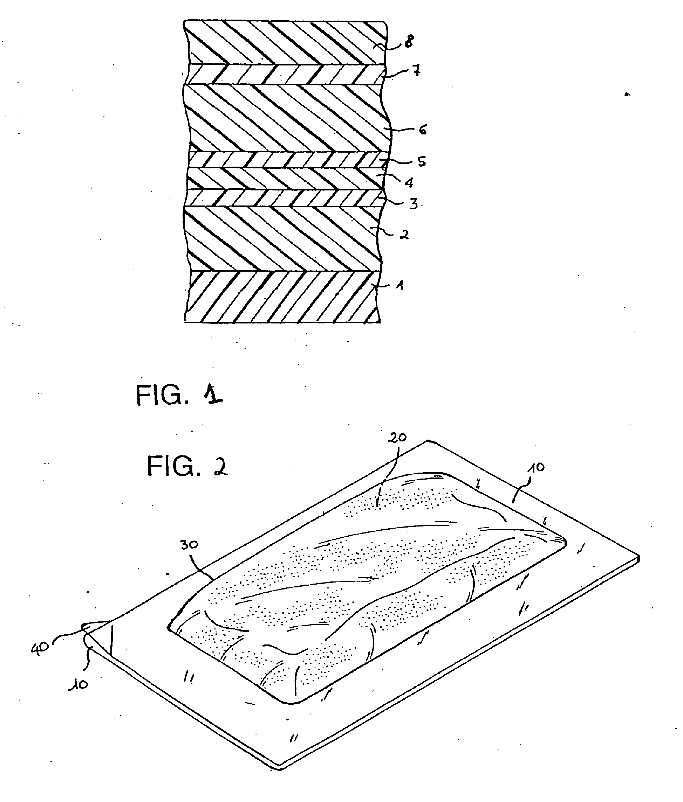

In one preferred embodiment, which is illustrated in Fig. 1, the laminate of the present invention comprises a sealing layer of linear low density polyethylene (density 0.917 g/cm³, MI 3.3 g/10 min, Dowlex™ SC 2101 sold by Dow - 12 µm), indicated by the numeral 1, a second, bulk, layer of ethylene-vinyl acetate copolymer (18 % VA, MI 0.7 g/10 min, Elvax™ 3165 sold by DuPont - 26 µm) indicated by the numeral 2, a third, tie, layer of maleic anhydride polyethylene (density 0.917 g/cm3, MI 2.3 g/min, Orevac® 18303 , sold by Elf Atochem - 5 µm) indicated by the numeral 3, a fourth gas-barrier layer of ethylene-vinyl alcohol copolymer (ethylene content of 38 % by mole,density 1.17 g/cc, MI 3.3 g/min, Soarnol® ET3803 sold by Nippon Gohsei - 9 µm) indicated by the numeral 4, a fifth, tie, layer of maleic anhydride modified polyethylene (density 0.917 g/cm3, MI 2.3 g/min, Orevac® 18303 , sold by Elf Atochem - 5 µm) indicated by the numeral 5, a sixth, bulk, layer of ethylene-vinyl acetate copolymer (18 % VA, MI 0.7 g/10 min, Elvax™ 3165 sold by DuPont - 26 µm) indicated by the numeral 6, a seventh, tie, layer of maleic anhydride modified EVA (26 %VA, density 0.95g/cc, MI 3.5 g/min, Orevac 18211 sold by Elf Atochem - 7 µm) indicated by the numeral 7, and a eighth, outer abuse, layer of PETG copolyester (Tg 81 °C and a tensile modulus of 1,900 MPa - Eastar PETG copolyester 6763 - 10 µm) indicated by the numeral 8.

The layers are arranged in the order listed, i.e., the first layer is adjacent and adhered to the second layer, etc.as indicated in Fig. 1. The first layer serves as sealant layer capable of forming heat-seal with the VSP package support and is in contact with the packaged product. The eighth layer serves as an abuse-resistant layer and forms the outer surface of the VSP package that will be in contact with the heated dome surface during the packaging process.

In another embodiment the laminate of the present invention has the same first seven layers as indicated above (the same layers indicated with the numerals 1 to 7 in Fig. 1) and the eighth outer abuse layer is of an ethylene-norbornene copolymer (Tg of 85 °C, and a tensile modulus of 2600 MPa - Topas™ 8007 sold by Ticona - 10 µm).

In still another embodiment, the laminate of the invention comprises the same layers from the second to the eighth of the first embodiment (the same layers indicated by the numerals 2 to 8 in Fig. 1) and has a sealing layer of ionomer (inc partial salt of ethylene-methacrylic acid - MI 1.8 g/10 min - Surlyn™ 1650 sold by Du Pont - 12 µm).

For use in a VSP packaging method, the laminate of the invention, plain or suitably register printed, is fed to the upper section of a heated vacuum chamber comprising an upper and a lower section, and a vacuum is applied thereto from the outside, thereby drawing the laminate into a concave form against the inwardly sloping walls of the upper section of the chamber and against the ports contained in the horizontal wall portion thereof (the top of the dome). Any conventional vacuum pump can be used to apply the vacuum and preferably the laminate is suitably pre-heated prior to the foregoing operation to render it more formable and thus better able to assume a concave shape in the upper section of the vacuum chamber. The product to be packaged is positioned on a support member, that can be flat or shaped, typically tray-shaped, and placed on a platform that is carried in the vacuum chamber, in the lower section thereof, just below the dome. Then the vacuum chamber is closed by moving the upper section down onto the lower one and during this whole sequence of operations vacuum is constantly applied to retain the concave shape of the laminate. Once the vacuum chamber is closed, vacuum is applied also in the lower section of the vacuum chamber in order to evacuate the space between the support member and the top web laminate. Vacuum in the upper section of the vacuum chamber continues to be applied to retain the concave shape of the laminate until the area between the support and the laminate is evacuated, then it is released and atmospheric pressure is admitted. This will give collapse of the softened top laminate over the product and support, as the atmosphere pushing the laminate from the top and the vacuum pulling it from the bottom will cooperatively work to have the laminate substantially conform to the shape of the product to be packaged on the support member. The end result is the VSP packaged product as shown in Fig. 2 wherein 10 is the support, 20 is the packaged product, 30 is the top web that conforms to the packaged product and the support, and 40 is the optional tab that is grasped by the end user's fingers and torn when the package has to be opened. In some instances heat-sealing bars or other sealing means can be present in the vacuum chamber to carry out a perimeter heat-seal of the laminate to the support member. In a preferred embodiment the top laminate used in this process is register printed.

## Claims

1. A cast coextruded, multilayer, laminate, suitable for use as a top web in a VSP process, said multi-layer laminate being **characterized by** a modulus at room temperature (23°C) of at least 4,000 kg/cm² and comprising at least
a polyolefin sealing layer a),
a gas-barrier layer b) and
a layer c) of a resin material having Tg comprised between 70 °C and 100 °C, and a tensile modulus (evaluated according to ASTM D882 on a 250 µm sheet) of at least 1,900 MPa.

2. The laminate of claim 1 wherein the polyolefin of the sealing layer a) is selected from the group consisting of polyethylenes, such as IDPE, MDPE, HDPE, linear polyethylenes, such as LLDPE and VLDPE, ethylene-vinyl acetate, ethylene-alkyl acrylates, ethylene-alkyl methacrylates, ionomers, ethylene-propylene copolymers, ethylene-propylene-butene-copolymers and their blends in any proportion.

3. The laminate of claim 1 wherein the gas-barrier resins of layer b) arc selected from the group consisting of EVOH, polyamides and blends thereof.

4. The laminate of claim 1 wherein the resin material of layer c) is an amorphous copolyester or a cycloolefin copolymer.

5. The laminate of claim 4 wherein the resin material of layer c) is an amorphous copolyester.

6. The laminate of claim 1 wherein layer c) is the outer abuse layer.

7. The laminate of any of preceding claims 1 to 6 wherein the laminate is register printed.

8. A vacuum skin packaging process where a laminate of any of the preceding claims 1 to 7 is employed as the top skin web.

9. A VSP package comprising a support member, a product positioned on said support member and a coextruded multilayer laminate of any of preceding claims 1 to 7, covering the product, substantially conforming to its shape and sealing to the support member all around the periphery of the product.

10. The VSP package of claim 9 wherein the laminate covering the product is register printed on its outer surface.

## Patentansprüche

1. Gegossenes, koextrudiertes, mehrschichtiges Laminat, das sich zur Verwendung als Oberbahn in einem VSP Verfahren eignet, durch einen Modul bei Raumtemperatur (23°C) von mindestens 4.000 kg/cm² **gekennzeichnet** ist und mindestens
eine Polyolefinsiegelschicht a),
eine Gasbarriereschicht b), und
eine Schicht c) aus einem Harzmaterial mit einer T_{g} zwischen 70°C und 100°C und einem Elastizitätsmodul (bestimmt nach ASTM D882 an einer 250 µm Folie) von mindestens 1.900 Mpa umfasst.

2. Laminat nach Anspruch 1, bei dem das Polyolefin der Siegelschicht a) ausgewählt ist aus der Gruppe bestehend aus Polyethylenen wie LDPE, MDPE und HDPE, linearen Polyethylenen wie LLDPE und VLDPE, Ethylen-Vinylacetat, Ethylen-Alkylacrylaten, Ethylen-Alkylmethacrylaten, Ionomeren, Ethylen-Propylen-Copolymeren, Ethylen-Propylen-Buten-Copolymeren und deren Mischungen in beliebigen Anteilen.

3. Laminat nach Anspruch 1, bei dem die Gasbarriereharze von Schicht b) ausgewählt sind aus der Gruppe bestehend aus EVOH, Polyamiden und Mischungen davon.

4. Laminat nach Anspruch 1, bei dem das Harzmaterial von Schicht c) ein amorpher Copolyester oder ein Cycloolefincopolymer ist.

5. Laminat nach Anspruch 4, bei dem das Harzmaterial von Schicht c) ein amorpher Copolyester ist.

6. Laminat nach Anspruch 1, bei dem Schicht c) die äußere Schutzschicht ist.

7. Laminat nach einem der vorangehenden Ansprüche 1 bis 6, bei dem das Laminat registerbedruckt ist.

8. Vakuumhautverpackungsverfahren, bei dem ein Laminat gemäß einem der vorangehenden Ansprüche 1 bis 7 als Oberhautbahn verwendet wird.

9. VSP-Packung, die ein Trägerelement, ein auf dem Trägerelement positioniertes Produkt und ein coextrudiertes mehrschichtiges Laminat gemäß einem der vorangehenden Ansprüche 1 bis 7, das das Produkt, im Wesentlichen angepasst an dessen Form, bedeckt und um den gesamten Rand des Produktes an das Trägerelement gesiegelt ist, umfasst.

10. VSP-Packung nach Anspruch 9, bei der das das Produkt bedeckende Laminat auf seiner äußeren Oberfläche registerbedruckt ist.

## Revendications

1. Stratifié multicouche, coextrudé, coulé, approprié pour une utilisation comme bande du dessus dans un procédé de VSP, ledit stratifié multicouche étant **caractérisé par** un module à température ambiante (23°C) d'au moins 4 000 kg/cm² et comprenant au moins
une couche de scellement de polyoléfine a),
une couche formant barrière contre les gaz b) et
une couche c) d'un matériau de résine ayant une valeur de Tg comprise entre 70°C et 100°C, et un module de traction (évalué selon ASTM D882 sur une feuille de 250 µm) d'au moins 1 900 MPa.

2. Stratifié de la revendication 1, où la polyoléfine de la couche de scellement a) est sélectionnée dans le groupe consistant en polyéthylènes, tels que LDPE, MDPE, HDPE, polyéthylènes linéaires, tels que LLDPE et VLDPE, éthylène-acétate de vinyle, éthylène-acrylates d'alkyle, éthylène-méthacrylates d'alkyle, ionomères, copolymères d'éthylène-propylène, copolymères d'éthylène-propylène-butène et leurs mélanges à toutes proportions.

3. Stratifié de la revendication 1, où les résines de la barrière contre les gaz de la couche b) sont sélectionnées dans le groupe consistant en EVOH, polyamides et leurs mélanges.

4. Stratifié de la revendication 1, où le matériau de la résine de la couche c) est un copolyester amorphe ou un copolymère de cyclooléfine.

5. Stratifié de la revendication 4, où le matériau de la résine de la couche c) est un copolyester amorphe.

6. Stratifié de la revendication 1, où la couche c) est la couche d'abus externe.

7. Stratifié de l'une quelconque des revendications 1 à 6, où les stratifié est imprimé en correspondance.

8. Procédé d'emballage en peau sous vide, où un stratifié de l'une quelconque des revendications 1 à 7 est employé comme bande de peau du dessus.

9. Emballage VSP comprenant un membre de support, un produit placé sur ledit membre de support et un stratifié multicouche coextrudé de l'une quelconque des revendications 1 à 7 couvrant le produit, se conformant sensiblement à sa forme et ce scellant au membre de support tout autour de la périphérie du produit.

10. Emballage VSP de la revendication 9, où le stratifié recouvrant le produit est imprimé en correspondance sur sa surface externe.
